# EUROPEAN PATENT APPLICATION

(11) **EP 4 371 963 A1**
(43) Date of publication of application: **22.05.2024**
(21) Application number: 22877800.7
(22) Date of filing: 04.08.2022
(51) Int. Cl.: C04B 35/30, H01F 1/34, C04B 35/64, C04B 35/626, C04B 35/80

(54) **NICUZN FERRITE MATERIAL, AND PREPARATION METHOD THEREFOR AND USE THEREOF**

(30) Priority: 08.10.2021 CN 202111171555
(71) Applicant: Hengdian Group DMEGC Magnetics Co., Ltd., Jinhua, Zhejiang 322118 (CN)
(72) Inventor: CHEN, Junlin, Jinhua, Zhejiang 322118 (CN); ZHANG, Likang, Jinhua, Zhejiang 322118 (CN)
(74) Representative: De Bonis, Paolo
(86) International application number: PCT/CN2022/110190
(87) International publication number: WO 2023/056776

(57) **Abstract**

Disclosed herein are a NiCuZn ferrite material, and a preparation method therefor and the use thereof. The preparation method comprises: sequentially subjecting raw materials to pretreatment and magnetic field heat treatment to obtain a precursor powder, and then sequentially subjecting the precursor powder to microwave pre-sintering, compression molding and microwave sintering to obtain a NiCuZn ferrite material. According to the preparation method for the NiCuZn ferrite material provided in the present application, by means of the synergistic effect of the magnetic field heat treatment, microwave pre-sintering and microwave sintering technologies, the internal stress of the pretreated powder can be more quickly released, and the pre-sintering and sintering temperatures are reduced, such that the solid-phase reaction is more quickly and fully carried out, so as to prepare the NiCuZn ferrite powder material having a smaller particle size, a good initial magnetic conductivity and a higher Curie temperature.

## Description

### TECHNICAL FIELD

Embodiments of the present application relate to the technical field of soft magnetic ferrite materials, and for example, a NiCuZn ferrite material, a preparation method therefor and use thereof.

### BACKGROUND

As the electronics industry develops and expands its application area, the demands placed on the NiCuZn ferrite material are becoming increasingly stringent. The NiCuZn ferrite, just like other materials, is affected by not only the chemical composition but also the particle morphology, size and microstructure in the performance, wherein the NiCuZn ferrite powder with high purity, fine particles and uniform size distribution has excellent performance.

At present, in addition to the conventional dry production process, a variety of wet chemical methods have been successfully applied to the synthesis of ferrite. However, the existing NiCuZn ferrite material has a maximum initial permeability of around 3000, a small serve frequency range, and large loss at high frequency. With the development trend of miniaturization, micromation, and high performance of devices as well as the higher requirements on short-wave and ultra-short-wave communication devices at the present stage, the NiCuZn ferrite material is required to possess higher initial permeability, wider bandwidth, and lower loss, and also good highfrequency characteristics, high Curie temperature, and low temperature coefficient.

CN109320227A discloses a NiCuZn ferrite material and a preparation method therefor and use thereof. The NiCuZn ferrite material is essentially consisted of 48.8-50mol% of Fe₂O₃, 32-34mol% of ZnO, 6.5-8mol% of NiO and 8.5-12.7mol% of CuO. The preparation method includes: (1) wet-mixing and crushing proportioned materials, and then performing drying to obtain powders; (2) heating and then pre-sintering the powers; (3) performing crushing and drying; (4) preparing blanks; and (5) performing sintering. However, the initial permeability of this NiCuZn ferrite material is not high, and there is no technical solution for the soft magnetic NiCuZn ferrite to have ultra-high initial permeability powders.

CN101236819B discloses a nickel-copper-zinc ferrite and a manufacturing method therefor; the ferrite includes a main component and an auxiliary component; the main component includes 48-50mol% Fe₂O₃, 13-16mol% NiO, 29-31.5mol% ZnO, and 4.5-6.5mol% CuO; the auxiliary component includes V₂O₅, MoO₃, and TiO₂; and the total content of the auxiliary component is 0.01-0.08wt% relative to the total content of the main component. Although the nickel-copper-zinc ferrite has a high Curie temperature, its initial permeability is not high, and there is no technical solution for the soft magnetic NiCuZn ferrite to have ultra-high initial permeability powders.

CN1631839 discloses a low-temperature co-fired NiCuZn ferrite material and a preparation method therefor; a main phase has a spinel structure, and the main phase includes Fe₂O₃, ZnO, CuO, and NiO; the added impurities are cobalt nitrate and manganese nitrate which are analytically pure; the low-temperature co-fired NiCuZn ferrite material is composed of the main phase and the added impurities. In addition, the NiCuZn ferrite powder is obtained by dissolution, sol-gel preparation, and self-propagating combustion using formulation amounts of nitrate salts of each ion as raw materials. This NiCuZn ferrite material has low magnetic loss and low temperature coefficient, but the initial permeability and Curie temperature are not mentioned.

Therefore, how to prepare powdered NiCuZn ferrite material with super-high initial permeability and high Curie temperature at the same time is of great importance for the development of miniaturization, micromation, and high performance of devices as well as the short-wave and ultra-short-wave communication devices.

### SUMMARY

The following is a summary of the subject matter described in detail herein. The summary is not intended to limit the protection scope of the claims.

An embodiment of the present application provides a NiCuZn ferrite material, a preparation method therefor and use thereof, which, by the synergistic effect among the magnetic field heat treatment, microwave pre-sintering and microwave sintering technologies, can rapidly release the internal stresses of the pre-treated powder, reduce the temperatures of the pre-sintering and sintering, and accelerate the solid state reaction to go fast and completely, so as to obtain the NiCuZn ferrite powder material which has a small particle size and also excellent initial permeability and high Curie temperature.

In a first aspect, an embodiment of the present application provides a preparation method for a NiCuZn ferrite material, and the preparation method comprises:
performing pre-treatment and magnetic field heat treatment sequentially on a raw material to obtain a precursor powder, and then performing microwave pre-sintering, compression molding and microwave sintering sequentially on the precursor powder to obtain the NiCuZn ferrite material.

The preparation method for a NiCuZn ferrite material provided in the present application, through the synergistic effect among the magnetic field heat treatment, microwave pre-sintering and microwave sintering technologies, can rapidly release the internal stresses of the pre-treated powder, reduce the temperatures of the pre-sintering and sintering, and accelerate the solid state reaction to go fast and completely, so as to obtain the NiCuZn ferrite powder material which has a small particle size and also excellent initial permeability and high Curie temperature.

As a preferred technical solution of the present application, the pre-treatment comprises:
dissolving the raw material in a solvent to form a raw material solution, adding an alkali solution dropwise to adjust the raw material solution to a neutral pH, and then performing stirring treatment and drying sequentially.

In the present application, by pre-treating the raw material using a wet process, the internal stresses of the pre-treated powder are rapidly released, the temperatures of the pre-sintering and sintering are reduced, and the solid state reaction are accelerated to go fast and completely.

Preferably, the raw material comprises iron oxide, nickel oxide, zinc oxide and copper oxide.

Preferably, a molar ratio of iron oxide, nickel oxide, zinc oxide and copper oxide is 50:(11-13):(32-34):(5-6), which may be, for example, 50:11:34:5, 50:11.2:33.8:5.8, 50:11.5:33.5:5.8, 50:11.8:33.2:5.6, 50:12:33:5.5, 50:12.3:32.8:5.5, 50:12.5:32.5:5.3, 50:12.8:32.2:5 or 50:13:32:5; however, the molar ratio is not limited to the listed values, other unlisted values within the numerical range are also applicable.

Preferably, the raw material further comprises a carbon material.

Preferably, the carbon material comprises graphene and/or carbon fibers.

Preferably, the solvent comprises deionized water.

It is to be noted that the addition amount of the solvent is not specifically or particularly limited in the present application, as long as the solvent added can dissolve the raw material. Therefore, it can be understood that those skilled in the art can select the addition amount of the solvent according to the actual use situation and addition amount of the raw material.

Preferably, citric acid is added to the raw material solution before using the alkali solution to adjust the pH of the raw material solution.

In the present application, the addition of citric acid to the raw material solution can facilitate the agglomeration in the raw material solution and reduce the distance between particles, thereby improving the pre-sintering activity and rate during the microwave pre-sintering process for the particles.

Preferably, the pH of the raw material solution is adjusted to 6-8, which may be, for example, 6, 6.2, 6.5, 6.8, 7, 7.2, 7.5, 7.8 or 8; however, the pH is not limited to the listed values, other unlisted values within the numerical range are also applicable.

In the present application, adjusting the raw material solution to a neutral pH can protect the equipment from being corroded; meanwhile, the acidic or alkali raw material solution will influence the subsequent compression molding process, and further influence the performance of the product. Therefore, the initial permeability of the NiCuZn ferrite material can be increased by the dropwise addition of alkali solution to adjust the raw material solution to a neutral pH.

Preferably, the alkali solution comprises ammonia water.

Preferably, the alkali solution has a mass concentration of 1.5-3.8wt%, which may be, for example, 1.5wt%, 1.8wt%, 2wt%, 2.3wt%, 2.5wt%, 2.8wt%, 3wt%, 3.2wt%, 3.5wt% or 3.8wt%; however, the mass concentration is not limited to the listed values, other unlisted values within the numerical range are also applicable.

It is to be noted that the addition amount of the alkali solution is not specifically or particularly limited in the present application, as long as the alkali solution added can adjust the raw material solution to a neutral pH. Therefore, it can be understood that those skilled in the art can adjust the addition amount of the alkali solution according to the actual use situation.

Preferably, the stirring treatment has a temperature of 70-75°C, which may be, for example, 70°C, 71°C, 72°C, 73°C, 74°C or 75°C; however, the temperature is not limited to the listed values, other unlisted values within the numerical range are also applicable.

Preferably, the stirring treatment has a time of 5-10 min, which may be, for example, 5 min, 6 min, 7 min, 8 min, 9 min or 10 min; however, the time is not limited to the listed values, other unlisted values within the numerical range are also applicable.

Preferably, the stirring treatment has a speed of 20-26 rpm/min, which may be, for example, 20 rpm/min, 21 rpm/min, 22 rpm/min, 23 rpm/min, 24 rpm/min, 25 rpm/min or 26 rpm/min; however, the speed is not limited to the listed values, other unlisted values within the numerical range are also applicable.

In the present application, the stirring under a heating condition can further facilitate the agglomeration in the raw material solution to form a slurry, and reduce the distance between particles, thereby improving the pre-sintering activity and rate during the microwave pre-sintering process for the particles.

Preferably, the drying has a temperature of 155-165°C, which may be, for example, 155°C, 156°C, 157°C, 158°C, 159°C, 160°C, 161°C, 162°C, 163°C, 164°C or 165°C; however, the temperature is not limited to the listed values, other unlisted values within the numerical range are also applicable.

Preferably, the drying has a time of 2-2.5 h, which may be, for example, 2 h, 2.1 h, 2.2 h, 2.3 h, 2.4 h or 2.5 h; however, the time is not limited to the listed values, other unlisted values within the numerical range are also applicable.

In the present application, during the drying process, redox reaction occurs between the main raw materials, self-combustion is induced and thus the system instantly reaches a high temperature, so as to obtain the pre-treated powder. Meanwhile, by being dried at a high temperature of 155-165°C, the raw material can have a more thorough combustion reaction during the process.

In addition, the raw material also comprises graphene and/or carbon fibers, and in the high temperature environment, the graphene and the carbon fibers are composited with each other by interlacing and then uniformly coated by the pre-treated powder, and as the pre-treated powder is coated on the surface of the composite, the pre-treated powder can be effectively activated, so that the product has a high permeability, and meanwhile, the pre-treated powder can also be fined and exhibit superparamagnetism, thereby effectively improving the activity and rate in the subsequent microwave pre-sintering.

As a preferred technical solution of the present application, the magnetic field heat treatment has a magnetic field strength of 40-55 mT, which may be, for example, 40 mT, 42 mT, 45 mT, 48 mT, 50 mT, 52 mT or 55 mT; however, the magnetic field strength is not limited to the listed values, other unlisted values within the numerical range are also applicable.

The magnetic field strength of the magnetic field heat treatment is limited to 40-55 mT in the present application; when the magnetic field strength is higher than 55 mT, the agglomeration of precursor powder will occur due to the increased anisotropy; when the magnetic field strength is lower than 40 mT, the excessively low magnetic field strength cannot lead the powder to superparamagnetism, resulting in an uneven distribution in the precursor powder.

Preferably, the magnetic field heat treatment has a temperature of 465-475°C, which may be, for example, 465°C, 466°C, 467°C, 468°C, 469°C, 470°C, 471°C, 472°C, 473°C, 474°C or 475°C; however, the temperature is not limited to the listed values, other unlisted values within the numerical range are also applicable.

The temperature of the magnetic field heat treatment is limited to 465-475°C in the present application. When the temperature is higher than 475°C, the cooling time will be extended; when the temperature is lower than 465°C, the synthesis of the target product cannot be promoted.

Preferably, the magnetic field heat treatment has a time of 60-70 min, which may be, for example, 60 min, 61 min, 62 min, 63 min, 64 min, 65 min, 66 min, 67 min, 68 min, 69 min or 70 min; however, the time is not limited to the listed values, other unlisted values within the numerical range are also applicable.

The time of the magnetic field heat treatment is limited to 60-70 min in the present application; when the time is higher than 70 min, the cooling time will be too long, which is not conducive to the performance improvement of the product; when the time is lower than 60 min, the internal stresses of the pre-treated powder will not be sufficiently released, which thus influences the material performance.

In the present application, magnetic field heat treatment is performed before microwave pre-sintering; during the magnetic field heat treatment, the heat treatment can enable the pre-treated powder to release the internal stresses, reduce the anisotropy and distribute uniformly, and thereby the permeability is improved, and under the magnetic field, such release is improved in intensity, and at the same time, because the pre-treated powder is coated on the surface of graphene-carbon fiber composite, the speed of such release is improved; the synergistic effect of the magnetic field heat treatment and the coating effect significantly improve the permeability and Curie temperature of the ferrite material.

Preferably, cooling treatment is performed after the magnetic field heat treatment to obtain the precursor powder.

Preferably, the cooling treatment is natural cooling.

As a preferred technical solution of the present application, a primary ball milling, centrifugal spray granulation and a primary screening are performed sequentially on the precursor powder before the microwave pre-sintering.

Preferably, the primary ball milling is wet ball milling.

Preferably, the primary ball milling has a time of 50-70 min, which may be, for example, 50 min, 52 min, 55 min, 58 min, 60 min, 63min, 65min, 67min or 70 min; however, the time is not limited to the listed values, other unlisted values within the numerical range are also applicable.

Preferably, the primary ball milling has a rotation speed of 20-30 rpm/min, which may be, for example, 20 rpm/min, 21 rpm/min, 22 rpm/min, 23 rpm/min, 24 rpm/min, 25 rpm/min, 26 rpm/min, 27 rpm/min, 28 rpm/min, 29 rpm/min or 30 rpm/min; however, the rotation speed is not limited to the listed values, other unlisted values within the numerical range are also applicable.

Preferably, mill balls of the primary ball milling are zirconia balls.

Preferably, in the primary ball milling, a mass ratio of the mill balls, water and precursor powder is (5-6):(0.8-1.0):1, which may be, for example, 5:0.8:1, 5.2:0.8:1, 5.5:0.9:1, 5.8:0.9:1 or 6:1:1; however, the mass ratio is not limited to the listed values, other unlisted values within the numerical range are also applicable.

Preferably, a primary ball milled product is obtained from the primary ball milling, and the primary ball milled product has a particle size of 1-1.5 µm, which may be, for example, 1 µm, 1.2 µm, 1.3 µm, 1.4 µm or 1.5 µm; however, the particle size is not limited to the listed values, other unlisted values within the numerical range are also applicable.

Preferably, the centrifugal spray granulation has an inlet temperature of 250-350°C, which may be, for example, 250°C, 280°C, 300°C, 320°C or 350°C; however, the temperature is not limited to the listed values, other unlisted values within the numerical range are also applicable.

Preferably, the centrifugal spray granulation has an outlet temperature of 80-110°C, which may be, for example, 80°C, 85°C, 90°C, 95°C, 100°C, 105°C or 350°C; however, the temperature is not limited to the listed values, other unlisted values within the numerical range are also applicable.

In the present application, the centrifugal spray granulation is used because of the large surface area of the droplets sprayed and the short drying time of the material (generally 15-30S), and the particles obtained from spray drying are very fine, which is conducive to increasing the density of the molded blanks and the sintering density, and thereby is conducive to improving the initial permeability of the material.

Preferably, the primary screening is performed with a sieve of 100-400 mesh, which may be, for example, 100 mesh, 150 mesh, 200 mesh, 250 mesh, 300 mesh, 350 mesh or 400 mesh; however, the mesh number is not limited to the listed values, other unlisted values within the numerical range are also applicable.

As a preferred technical solution of the present application, the microwave pre-sintering has a power of 2.5-8.5 kw, which may be, for example, 2.5 kw, 3 kw, 3.5 kw, 4 kw, 4.5 kw, 5 kw, 5.5 kw, 6 kw, 6.5 kw, 7 kw, 7.5 kw, 8 kw or 8.5 kw; however, the power is not limited to the listed values, other unlisted values within the numerical range are also applicable.

Preferably, the microwave pre-sintering has a frequency of 2.4-2.45 GHz, which may be, for example, 2.4 GHz, 2.42 GHz, 2.43 GHz, 2.44 GHz or 2.45 GHz; however, the frequency is not limited to the listed values, other unlisted values within the numerical range are also applicable.

Preferably, the microwave pre-sintering has a temperature of 650-750°C, which may be, for example, 650°C, 660°C, 670°C, 680°C, 690°C, 700°C, 710°C, 720°C, 730°C, 740°C or 750°C; however, the temperature is not limited to the listed values, other unlisted values within the numerical range are also applicable; further preferably, the temperature is 700-720°C.

The temperature of the microwave pre-sintering is limited to 650-750°C in the present application; when the temperature is higher than 750°C, the powder particles will be overly hard, extending the time of secondary milling, and meanwhile, the reduced activity of the powder is not conducive to the solid state reaction in the secondary sintering; when the temperature is lower than 650°C, the powder will have an excessively high activity in the secondary sintering, resulting in the large size shrinkage and easily deformed product.

Preferably, the microwave pre-sintering has a time of 20-40 min, which may be, for example, 20 min, 23 min, 25 min, 28 min, 30 min, 32 min, 35 min, 38 min or 40 min; however, the time is not limited to the listed values, other unlisted values within the numerical range are also applicable; further preferably, the time is 25-35 min.

The time of the microwave pre-sintering is limited to 20-40 min in the present application; when the time is higher than 40 min, the pre-sintering temperature will be relatively high, and accordingly, the crushed particles will have uneven distribution, discontinuous crystal growth will occur during the sintering, and the product performance will be greatly reduced; when the time is lower than 20 min, the pre-sintering temperature will be relatively low, and thus the bulk density of ferrite powder will be small, and the sintered blanks will have large shrinkage, failing to achieving the expected process purpose.

Preferably, the microwave pre-sintering has an atmosphere of air.

As a preferred technical solution of the present application, a secondary ball milling, spray granulation and a secondary screening are performed sequentially between the microwave pre-sintering and compression molding

Preferably, the secondary ball milling is wet ball milling.

Preferably, the secondary ball milling has a time of 170-190 min, which may be, for example, 170 min, 172 min, 175 min, 178 min, 180 min, 182 min, 185 min, 188 min or 190 min; however, the time is not limited to the listed values, other unlisted values within the numerical range are also applicable.

Preferably, the secondary ball milling has a rotation speed of 20-30 rpm/min, which may be, for example, 20 rpm/min, 21 rpm/min, 22 rpm/min, 23 rpm/min, 24 rpm/min, 25 rpm/min, 26 rpm/min, 27 rpm/min, 28 rpm/min, 29 rpm/min or 30 rpm/min; however, the rotation speed is not limited to the listed values, other unlisted values within the numerical range are also applicable.

Preferably, mill balls of the secondary ball milling are zirconia balls.

Preferably, in the secondary ball milling, a mass ratio of the mill balls, water and a product of the microwave pre-sintering is (5-6):(0.8-1.0):1, which may be, for example, 5:0.8:1, 5.2:0.8:1, 5.5:0.9:1, 5.8:0.9:1 or 6:1:1; however, the mass ratio is not limited to the listed values, other unlisted values within the numerical range are also applicable.

Preferably, molybdenum oxide is also added in the secondary ball milling.

Preferably, based on a total mass fraction of the iron oxide, nickel oxide, zinc oxide and copper oxide being 100%, the molybdenum oxide has an addition amount of 0-0.15wt%, which may be, for example, 0wt%, 0.02wt%, 0.05wt%, 0.08wt%, 0.1wt%, 0.12wt% or 0.15wt%; however, the addition amount is not limited to the listed values, other unlisted values within the numerical range are also applicable.

In the present application, molybdenum oxide is a low melting point substance, and adding it in appropriate amounts can facilitate the densification of the material, promote the growth of grains, increase the initial permeability of the material, and to a certain extent, reduce the temperatures of pre-sintering and sintering. However, as molybdenum oxide is a non-magnetic substance, its excessive addition will reduce the Curie temperature of the NiZnCu ferrite material.

Preferably, a secondary ball milled product is obtained from the secondary ball milling, and the secondary ball milled product has a particle size of 0.8-0.95 µm, which may be, for example, 0.8 µm, 0.82 µm, 0.85 µm, 0.87 µm, 0.9 µm, 0.92 µm or 0.95 µm; however, the particle size is not limited to the listed values, other unlisted values within the numerical range are also applicable.

Preferably, the spray granulation has an inlet temperature of 250-400°C, which may be, for example, 250°C, 280°C, 300°C, 320°C, 350°C, 380°C or 400°C; however, the temperature is not limited to the listed values, other unlisted values within the numerical range are also applicable.

Preferably, the spray granulation has an outlet temperature of 80-110°C, which may be, for example, 80°C, 85°C, 90°C, 95°C, 100°C, 105°C or 350°C; however, the temperature is not limited to the listed values, other unlisted values within the numerical range are also applicable.

In the present application, the spray granulation is used because of the large surface area of the droplets sprayed and the short drying time of the material (generally 15-30S), and the particles obtained from spray drying are very fine, which is conducive to increasing the density of the molded blanks and the sintering density, and thereby is conducive to improving the initial permeability of the material.

Preferably, the secondary screening is performed with a sieve of 30-200 mesh, which may be, for example, 30 mesh, 50 mesh, 80 mesh, 100 mesh, 120 mesh, 150 mesh, 180 mesh or 200 mesh; however, the mesh number is not limited to the listed values, other unlisted values within the numerical range are also applicable.

Preferably, the compression molding has a density of 3.3-3.5 g/cm³, such as which may be, for example, 3.3 g/cm³, 3.32 g/cm³, 3.35 g/cm³, 3.4 g/cm³, 3.43 g/cm³, 3.45 g/cm³, 3.48 g/cm³ or 3.5 g/cm³; however, the density is not limited to the listed values, other unlisted values within the numerical range are also applicable.

Preferably, the microwave sintering has a power of 3.5-11.7 kw, which may be, for example, 3.5 kw, 4 kw, 4.5 kw, 5 kw, 5.5 kw, 6 kw, 6.5 kw, 7 kw, 7.5 kw, 8 kw, 8.5 kw, 9 kw, 9.5 kw, 10 kw, 10.5 kw, 11 kw or 11.7 kw; however, the power is not limited to the listed values, other unlisted values within the numerical range are also applicable.

Preferably, the microwave sintering has a frequency of 2.43-2.48 GHz, which may be, for example, 2.43 GHz, 2.44 GHz, 2.45 GHz, 2.46 GHz, 2.47 GHz or 2.48 GHz; however, the frequency is not limited to the listed values, other unlisted values within the numerical range are also applicable.

Preferably, the microwave sintering has a temperature of 1000-1200°C, which may be, for example, 1000°C, 1020°C, 1050°C, 1080°C, 1100°C, 1120°C, 1150°C, 1180°C or 1200°C; however, the temperature is not limited to the listed values, other unlisted values within the numerical range are also applicable.

The temperature of the microwave sintering is limited to 1000-1200°C in the present application; when the temperature is higher than 1200°C, the ferrite grains will grow rampantly to form giant crystals, and thus the permeability and Curie temperature of the material will be reduced; when the temperature is lower than 1000°C, the grains will not get full growth, resulting in uneven grain growth, and the un-full and incomplete grains are also not conducive to improving the permeability and Curie temperature of the material.

Preferably, the microwave sintering has a time of 7-8 h, which may be, for example, 7 h, 7.1 h, 7.2 h, 7.3 h, 7.4 h, 7.5 h, 7.6 h, 7.7 h, 7.8 h, 7.9 h or 8 h; however, the time is not limited to the listed values, other unlisted values within the numerical range are also applicable.

The time of the microwave sintering is limited to 7-8 h in present application; when the time is higher than 8 h, the temperature-holding time will be extended, the grain size will be larger, and any mistake, even a small one, over controlling the grain growth conditions will cause the growth of abnormal grains, the result of which is that the ferrite material has dual structures and its performance is reduced directly; when the time is lower than 7 h, the grains will have small size and incomplete morphology, which also leads to reduced performance.

Preferably, the microwave sintering has an atmosphere of air.

As a preferred technical solution of the present application, the preparation method comprises the following steps:
(1) dissolving iron oxide, nickel oxide, zinc oxide and copper oxide in deionized water at a molar percentage of 50:(11-13):(32-34):(5-6), adding a carbon material and dissolving to obtain a raw material solution, adding citric acid to the raw material solution, dropwise adding ammonia water at a mass concentration of 1.5-3.8wt% to adjust the raw material solution to a pH of 6-8, then performing stirring treatment at 70-75°C for 5-10 min with a speed of 20-26 rpm/min, then performing drying at 155-165°C for 2-2.5 h, subsequently performing magnetic field heat treatment on the dried product at 465-475°C for 60-70 min with a magnetic field strength of 40-55 mT, and performing cooling to obtain a precursor powder;
(2) performing wet ball milling at a rotation speed of 20-30 rpm/min for 50-70 min with mill balls, water and the precursor powder at a mass ratio of (5-6):(0.8-1.0): 1 to obtain a primary ball milled product with a particle size of 1-1.5 µm, and subsequently performing centrifugal spray granulation and a primary screening sequentially on the primary ball milled product, wherein the centrifugal spray granulation has an inlet temperature of 250-350°C and an outlet temperature of 80-110°C, and the primary screening is performed with a sieve of 100-400 mesh;
(3) performing heating to 650-750°C at a microwave power of 2.5-10.5 kw and a microwave frequency of 2.4-2.45 GHz, and performing microwave pre-sintering on particles obtained from the primary screening for 20-40 min in an air atmosphere to obtain a microwave pre-sintered product;
(4) performing wet ball milling at a rotation speed of 20-30 rpm/min for 170-190 min with mill balls, water and the microwave pre-sintered product at a mass ratio of (5-6):(0.8-1.0): 1, adding 0-0.15wt% of molybdenum oxide in the secondary ball milling, based on a total mass fraction of the iron oxide, nickel oxide, zinc oxide and copper oxide being 100%, to obtain a secondary ball milled product with a particle size of 0.8-0.95 µm, and subsequently performing spray granulation and a secondary screening sequentially on the secondary ball milled product, wherein the spray granulation has an inlet temperature of 250-400°C and an outlet temperature of 80-110°C, and the secondary screening is performed with a sieve of 30-200 mesh; and
(5) performing compression molding on particles obtained from the secondary screening, wherein the compression molding has a density of 3.3-3.5 g/cm³, subsequently performing heating to 1000-1200°C at a microwave power of 3.5-11.7 kw and a microwave frequency of 2.43-2.48 GHz, and performing microwave sintering for 7-8 h in an air atmosphere to obtain the NiCuZn ferrite material.

In a second aspect, an embodiment of the present application provides a NiCuZn ferrite material, and the NiCuZn ferrite material is obtained by using the preparation method according to the first aspect.

As a preferred technical solution of the present application, the NiCuZn ferrite material is powdered particles.

Preferably, the NiCuZn ferrite material has a particle size of 100-156 µm, which may be, for example, 100 µm, 110 µm, 120 µm, 130 µm, 140 µm, 150 µm or 156 µm; however, the particle size is not limited to the listed values, other unlisted values within the numerical range are also applicable.

The NiCuZn ferrite material provided by the present application has a small particle size, and on the basis of the smaller particle size, the NiCuZn ferrite material has excellent initial permeability and high Curie temperature.

In a third aspect, an embodiment of the present application provides use of the NiCuZn ferrite material according to the second aspect, and the NiCuZn ferrite material is used in the field of wireless charging.

Compared with the related art, the embodiments of the present application have the following beneficial effects:
The NiCuZn ferrite material, the preparation method therefor and the use thereof provided by the embodiments of the present application, through the synergistic effect among the magnetic field heat treatment, microwave pre-sintering and microwave sintering technologies, can rapidly release the internal stresses of the pre-treated powder, reduce the temperatures of the pre-sintering and sintering, and accelerate the solid state reaction to go fast and completely, so as to obtain the NiCuZn ferrite powder material which has a small particle size and also excellent initial permeability and high Curie temperature.

Other aspects can be apparent after reading and understanding the detailed description.

### DETAILED DESCRIPTION

The technical solutions of the present application will be further described below through specific embodiments. It should be apparent to those skilled in the art that the examples are merely used for a better understanding of the present application and should not be regarded as a specific limitation on the present application.

### Example 1

This example provides a preparation method for a NiCuZn ferrite material, and the preparation method specifically comprises the following steps:
(1) iron oxide, nickel oxide, zinc oxide and copper oxide were dissolved in deionized water at a molar percentage of 50:12:33:5.5 and added with a carbon material to dissolve to obtain a raw material solution, and the raw material solution was added with citric acid, dropwise added with ammonia water with a mass concentration of 2.6wt% to adjust a pH of the raw material solution to 7, then subjected to stirring treatment at 73°C for 8 min with a speed of 23 rpm/min, and then dried at 160°C for 2.3 h, and subsequently, the dried product was subjected to magnetic field heat treatment at 470°C for 65 min with a magnetic field strength of 47 mT and cooled to obtained a precursor powder;
(2) mill balls, water and the precursor powder were subjected to wet ball milling at a mass ratio of 5.5:0.9: 1 for 60 min at a rotation speed of 25 rpm/min to obtain a primary ball milled product with a particle size of 1.2 µm, and subsequently the primary ball milled product was subjected to centrifugal spray granulation and a primary screening sequentially, wherein the centrifugal spray granulation had an inlet temperature of 300°C and an outlet temperature of 95°C, and the primary screening was performed with a 300-mesh sieve;
(3) after being heated to 710°C at a microwave power of 5.5 kw and a microwave frequency of 2.42 GHz, particles obtained from the primary screening were subjected to microwave pre-sintering for 30 min in an air atmosphere to obtain a microwave pre-sintered product;
(4) mill balls, water and the microwave pre-sintered product were subjected to wet ball milling at a mass ratio of 5.5:0.9: 1 for 180 min at a rotation speed of 25 rpm/min, and based on a total mass fraction of the iron oxide, nickel oxide, zinc oxide and copper oxide being 100%, 0.13wt% of molybdenum oxide was added in the secondary ball milling to obtain a secondary ball milled product with a particle size of 0.9 µm, and subsequently, the secondary ball milled product was subjected to spray granulation and a secondary screening sequentially, wherein the spray granulation had an inlet temperature of 350°C and an outlet temperature of 95°C, and the secondary screening was performed with a 100-mesh sieve; and
(5) particles obtained from the secondary screening were subjected to compression molding with a density of 3.4 g/cm³, subsequently heated to 1150°C at a microwave power of 7.6 kw and a microwave frequency of 2.45 GHz, and subjected to microwave sintering for 7.5 h in an air atmosphere to obtain the NiCuZn ferrite material.

### Example 2

This example provides a preparation method for a NiCuZn ferrite material, and the preparation method specifically comprises the following steps:
(1) iron oxide, nickel oxide, zinc oxide and copper oxide were dissolved in deionized water at a molar percentage of 50:11:34:5 and added with a carbon material to dissolve to obtain a raw material solution, and the raw material solution was added with citric acid, dropwise added with ammonia water with a mass concentration of 3.8wt% to adjust a pH of the raw material solution to 6, then subjected to stirring treatment at 70°C for 10 min with a speed of 20 rpm/min, and then dried at 155°C for 2.5 h, and subsequently, the dried product was subjected to magnetic field heat treatment at 475°C for 60 min with a magnetic field strength of 40 mT and cooled to obtained a precursor powder;
(2) mill balls, water and the precursor powder were subjected to wet ball milling at a mass ratio of 5:0.8:1 for 50 min at a rotation speed of 30 rpm/min to obtain a primary ball milled product with a particle size of 1 µm, and subsequently the primary ball milled product was subjected to centrifugal spray granulation and a primary screening sequentially, wherein the centrifugal spray granulation had an inlet temperature of 250°C and an outlet temperature of 80°C, and the primary screening was performed with a 100-mesh sieve;
(3) after being heated to 650°C at a microwave power of 2.5 kw and a microwave frequency of 2.4 GHz, particles obtained from the primary screening were subjected to microwave pre-sintering for 40 min in an air atmosphere to obtain a microwave pre-sintered product;
(4) mill balls, water and the microwave pre-sintered product were subjected to wet ball milling at a mass ratio of 5:0.8:1 for 190 min at a rotation speed of 20 rpm/min to obtain a secondary ball milled product with a particle size of 0.8 µm, and subsequently, the secondary ball milled product was subjected to spray granulation and a secondary screening sequentially, wherein the spray granulation had an inlet temperature of 250°C and an outlet temperature of 80°C, and the secondary screening was performed with a 30-mesh sieve; and
(5) particles obtained from the secondary screening were subjected to compression molding with a density of 3.3 g/cm³, subsequently heated to 1000°C at a microwave power of 3.5 kw and a microwave frequency of 2.43 GHz, and subjected to microwave sintering for 8 h in an air atmosphere to obtain the NiCuZn ferrite material.

### Example 3

This example provides a preparation method for a NiCuZn ferrite material, and the preparation method specifically comprises the following steps:
(1) iron oxide, nickel oxide, zinc oxide and copper oxide were dissolved in deionized water at a molar percentage of 50:13:32:6 and added with a carbon material to dissolve to obtain a raw material solution, and the raw material solution was added with citric acid, dropwise added with ammonia water with a mass concentration of 1.5wt% to adjust a pH of the raw material solution to 8, then subjected to stirring treatment at 75°C for 5 min with a speed of 26 rpm/min, and then dried at 165°C for 2 h, and subsequently, the dried product was subjected to magnetic field heat treatment at 465°C for 70 min with a magnetic field strength of 55 mT and cooled to obtained a precursor powder;
(2) mill balls, water and the precursor powder were subjected to wet ball milling at a mass ratio of 6:1:1 for 70 min at a rotation speed of 20 rpm/min to obtain a primary ball milled product with a particle size of 1.5 µm, and subsequently the primary ball milled product was subjected to centrifugal spray granulation and a primary screening sequentially, wherein the centrifugal spray granulation had an inlet temperature of 350°C and an outlet temperature of 110°C, and the primary screening was performed with a 400-mesh sieve;
(3) after being heated to 750°C at a microwave power of 8.5 kw and a microwave frequency of 2.45 GHz, particles obtained from the primary screening were subjected to microwave pre-sintering for 20 min in an air atmosphere to obtain a microwave pre-sintered product;
(4) mill balls, water and the microwave pre-sintered product were subjected to wet ball milling at a mass ratio of 6:1:1 for 170 min at a rotation speed of 30 rpm/min, and based on a total mass fraction of the iron oxide, nickel oxide, zinc oxide and copper oxide being 100%, 0.15wt% of molybdenum oxide was added in the secondary ball milling to obtain a secondary ball milled product with a particle size of 0.95 µm, and subsequently, the secondary ball milled product was subjected to spray granulation and a secondary screening sequentially, wherein the spray granulation had an inlet temperature of 400°C and an outlet temperature of 110°C, and the secondary screening was performed with a 200-mesh sieve; and
(5) particles obtained from the secondary screening were subjected to compression molding with a density of 3.5 g/cm³, subsequently heated to 1200°C at a microwave power of 11.7 kw and a microwave frequency of 2.48 GHz, and subjected to microwave sintering for 7 h in an air atmosphere to obtain the NiCuZn ferrite material.

### Example 4

This example provides a preparation method for a NiCuZn ferrite material, and the preparation method specifically comprises the following steps:
(1) iron oxide, nickel oxide, zinc oxide and copper oxide were dissolved in deionized water at a molar percentage of 50:12:33:5.5 and added with a carbon material to dissolve to obtain a raw material solution, and the raw material solution was added with citric acid, dropwise added with ammonia water with a mass concentration of 2.6wt% to adjust a pH of the raw material solution to 7, then subjected to stirring treatment at 73°C for 8 min with a speed of 23 rpm/min, and then dried at 160°C for 2.3 h, and subsequently, the dried product was subjected to magnetic field heat treatment at 470°C for 65 min with a magnetic field strength of 47 mT and cooled to obtained a precursor powder;
(2) mill balls, water and the precursor powder were subjected to wet ball milling at a mass ratio of 5.5:0.9:1 for 60 min at a rotation speed of 25 rpm/min to obtain a primary ball milled product with a particle size of 1.2 µm, and subsequently the primary ball milled product was subjected to centrifugal spray granulation and a primary screening sequentially, wherein the centrifugal spray granulation had an inlet temperature of 300°C and an outlet temperature of 95°C, and the primary screening was performed with a 300-mesh sieve;
(3) after being heated to 700°C at a microwave power of 5.5 kw and a microwave frequency of 2.42 GHz, particles obtained from the primary screening were subjected to microwave pre-sintering for 35 min in an air atmosphere to obtain a microwave pre-sintered product;
(4) mill balls, water and the microwave pre-sintered product were subjected to wet ball milling at a mass ratio of 5.5:0.9:1 for 180 min at a rotation speed of 25 rpm/min, and based on a total mass fraction of the iron oxide, nickel oxide, zinc oxide and copper oxide being 100%, 0.13wt% of molybdenum oxide was added in the secondary ball milling to obtain a secondary ball milled product with a particle size of 0.9 µm, and subsequently, the secondary ball milled product was subjected to spray granulation and a secondary screening sequentially, wherein the spray granulation had an inlet temperature of 350°C and an outlet temperature of 95°C, and the secondary screening was performed with a 100-mesh sieve; and
(5) particles obtained from the secondary screening were subjected to compression molding with a density of 3.4 g/cm³, subsequently heated to 1150°C at a microwave power of 7.6 kw and a microwave frequency of 2.45 GHz, and subjected to microwave sintering for 7.5 h in an air atmosphere to obtain the NiCuZn ferrite material.

### Example 5

This example provides a preparation method for a NiCuZn ferrite material, and the preparation method specifically comprises the following steps:
(1) iron oxide, nickel oxide, zinc oxide and copper oxide were dissolved in deionized water at a molar percentage of 50:12:33:5.5 and added with a carbon material to dissolve to obtain a raw material solution, and the raw material solution was added with citric acid, dropwise added with ammonia water with a mass concentration of 2.6wt% to adjust a pH of the raw material solution to 7, then subjected to stirring treatment at 73°C for 8 min with a speed of 23 rpm/min, and then dried at 160°C for 2.3 h, and subsequently, the dried product was subjected to magnetic field heat treatment at 470°C for 65 min with a magnetic field strength of 47 mT and cooled to obtained a precursor powder;
(2) mill balls, water and the precursor powder were subjected to wet ball milling at a mass ratio of 5.5:0.9:1 for 60 min at a rotation speed of 25 rpm/min to obtain a primary ball milled product with a particle size of 1.2 µm, and subsequently the primary ball milled product was subjected to centrifugal spray granulation and a primary screening sequentially, wherein the centrifugal spray granulation had an inlet temperature of 300°C and an outlet temperature of 95°C, and the primary screening was performed with a 300-mesh sieve;
(3) after being heated to 720°C at a microwave power of 5.5 kw and a microwave frequency of 2.42 GHz, particles obtained from the primary screening were subjected to microwave pre-sintering for 25 min in an air atmosphere to obtain a microwave pre-sintered product;
(4) mill balls, water and the microwave pre-sintered product were subjected to wet ball milling at a mass ratio of 5.5:0.9:1 for 180 min at a rotation speed of 25 rpm/min, and based on a total mass fraction of the iron oxide, nickel oxide, zinc oxide and copper oxide being 100%, 0.13wt% of molybdenum oxide was added in the secondary ball milling to obtain a secondary ball milled product with a particle size of 0.9 µm, and subsequently, the secondary ball milled product was subjected to spray granulation and a secondary screening sequentially, wherein the spray granulation had an inlet temperature of 350°C and an outlet temperature of 95°C, and the secondary screening was performed with a 100-mesh sieve; and
(5) particles obtained from the secondary screening were subjected to compression molding with a density of 3.4 g/cm³, subsequently heated to 1150°C at a microwave power of 7.6 kw and a microwave frequency of 2.45 GHz, and subjected to microwave sintering for 7.5 h in an air atmosphere to obtain the NiCuZn ferrite material.

### Example 6

This example differs from Example 1 in that the magnetic field heat treatment in step (1) has a magnetic field strength of 58 mT, and other process parameters and operation steps are the same as in Example 1.

### Example 7

This example differs from Example 1 in that the magnetic field heat treatment in step (1) has a magnetic field strength of 38 mT, and other process parameters and operation steps are the same as in Example 1.

### Example 8

This example differs from Example 1 in that the magnetic field heat treatment in step (1) has a temperature of 480°C, and other process parameters and operation steps are the same as in Example 1.

### Example 9

This example differs from Example 1 in that the magnetic field heat treatment in step (1) has a temperature of 460°C, and other process parameters and operation steps are the same as in Example 1.

### Example 10

This example differs from Example 1 in that the magnetic field heat treatment in step (1) has a time of 75 min, and other process parameters and operation steps are the same as in Example 1.

### Example 11

This example differs from Example 1 in that the magnetic field heat treatment in step (1) has a time of 55 min, and other process parameters and operation steps are the same as in Example 1.

### Example 12

This example differs from Example 1 in that the microwave pre-sintering in step (3) has a temperature of 760°C, and other process parameters and operation steps are the same as in Example 1.

### Example 13

This example differs from Example 1 in that the microwave pre-sintering in step (3) has a temperature of 640°C, and other process parameters and operation steps are the same as in Example 1.

### Example 14

This example differs from Example 1 in that the microwave pre-sintering in step (3) has a time of 45 min, and other process parameters and operation steps are the same as in Example 1.

### Example 15

This example differs from Example 1 in that the microwave pre-sintering in step (3) has a time of 15 min, and other process parameters and operation steps are the same as in Example 1.

### Example 16

This example differs from Example 1 in that the microwave sintering in step (5) has a temperature of 1220°C, and other process parameters and operation steps are the same as in Example 1.

### Example 17

This example differs from Example 1 in that the microwave sintering in step (5) has a temperature of 980°C, and other process parameters and operation steps are the same as in Example 1.

### Example 18

This example differs from Example 1 in that the microwave sintering in step (5) has a time of 8.5 h, and other process parameters and operation steps are the same as in Example 1.

### Example 19

This example differs from Example 1 in that the microwave sintering in step (5) has a time of 6.5 h, and other process parameters and operation steps are the same as in Example 1.

### Example 20

This example differs from Example 1 in that the process of adding ammonia water dropwise to adjust the pH of the raw material solution is not performed in step (1), and other process parameters and operation steps are the same as in Example 1.

### Comparative Example 1

This comparative example differs from Example 1 in that the process of microwave pre-sintering is not performed in step (3), and other process parameters and operation steps are the same as in

### Example 1.

### Comparative Example 2

This comparative example differs from Example 1 in that the microwave pre-sintering in step (3) is replaced by furnace pre-sintering, and other process parameters and operation steps are the same as in Example 1.

### Comparative Example 3

This comparative example differs from Example 1 in that the process of magnetic field heat treatment is not performed in step (1), and other process parameters and operation steps are the same as in Example 1.

### Comparative Example 4

This comparative example differs from Example 1 in that the magnetic field heat treatment in step (1) is replaced by a heat treatment process without magnetic field, and other process parameters and operation steps are the same as in Example 1.

### Comparative Example 5

This comparative example differs from Example 1 in that the microwave sintering in step (5) is replaced by furnace sintering, and other process parameters and operation steps are the same as in Example 1.

The performance test results of the NiCuZn ferrite materials prepared by Examples 1-20 and Comparative Examples 1-5 are shown in Table 1.

**Table 1**

| | Initial permeability | Curie temperature/°C |
|---|---|---|
| Example 1 | 4500 | 110 |
| Example 2 | 4200 | 105 |
| Example 3 | 4000 | 105 |
| Example 4 | 4350 | 110 |
| Example 5 | 4260 | 108 |
| Example 6 | 3228 | 100 |
| Example 7 | 3110 | 101 |
| Example 8 | 3155 | 100 |
| Example 9 | 3202 | 102 |
| Example 10 | 3194 | 103 |
| Example 11 | 2906 | 101 |
| Example 12 | 2993 | 96 |
| Example 13 | 3002 | 100 |
| Example 14 | 3067 | 97 |
| Example 15 | 3039 | 99 |
| Example 16 | 3506 | 102 |
| Example 17 | 3510 | 101 |
| Example 18 | 3688 | 101 |
| Example 19 | 3647 | 103 |
| Example 20 | 3650 | 110 |
| Comparative Example 1 | 3000 | 95 |
| Comparative Example 2 | 3025 | 98 |
| Comparative Example 3 | 3041 | 98 |
| Comparative Example 4 | 3033 | 101 |
| Comparative Example 5 | 3021 | 100 |

As can be seen from the data in Table 1:
(1) The NiCuZn ferrite materials of Examples 1-5 have high initial permeability and Curie temperature, indicating that the NiCuZn ferrite material obtained by the preparation method for a NiCuZn ferrite material provided by the present application have excellent performance.
(2) The initial permeability and Curie temperature of the NiCuZn ferrite materials of Examples 6-11 are lower than those of Example 1. For Example 6 and Example 7, the magnetic field strengths of the magnetic field heat treatment are too high and too low, respectively, and when the magnetic field strength is too high, the agglomeration of precursor powder will occur due to the increased anisotropy; when the magnetic field strength is too low, the excessively low magnetic field strength cannot lead the powder to superparamagnetism, resulting in an uneven distribution in the precursor powder. For Example 8 and Example 9, the temperatures of the magnetic field heat treatment are too high and too low, respectively, and when the temperature is too high, the cooling time will be too long, which is not conducive to the performance improvement of the product; when the temperature is too low, the synthesis of the target product cannot be promoted. For Example 10 and Example 11, the durations of the magnetic field heat treatment are too long and too short, respectively, and when the time of the magnetic field heat treatment is too long, the cooling time will be too long, which is not conducive to the performance improvement of the product; when the time of the magnetic field heat treatment is too short, the internal stresses of the pre-treated powder will not be sufficiently released, which influences the material performance. Therefore, the conditions of magnetic field heat treatment have a significant effect on the performance of NiCuZn ferrite material.
(3) The initial permeability and Curie temperature of the NiCuZn ferrite materials of Examples 12-15 are lower than those of Example 1. For Example 12 and Example 13, the temperatures of the microwave pre-sintering are too high and too low, respectively, and when the temperature of the microwave pre-sintering is too high, the powder particles will be overly hard, extending the time of secondary milling, and meanwhile, the reduced activity of the powder is not conducive to the solid state reaction in the secondary sintering; when the temperature of the microwave pre-sintering is too low, the powder will have an excessively high activity in the secondary sintering, resulting in the large size shrinkage and easily deformed product. For Example 14 and Example 15, the durations of the microwave pre-sintering are too long and too short, respectively, and when the time of the microwave pre-sintering is too long, the pre-sintering temperature will be relatively high, and accordingly, the crushed particles will have uneven distribution, discontinuous crystal growth will occur during the sintering, and the product performance will be greatly reduced. When the time of the microwave pre-sintering is too short, the pre-sintering temperature will be relatively low, and thus the bulk density of ferrite powder will be small, and the sintered blanks will have large shrinkage, failing to achieving the expected process purpose. Therefore, the conditions of microwave pre-sintering also have a significant effect on the performance of NiCuZn ferrite material.
(4) The initial permeability and Curie temperature of the NiCuZn ferrite materials of Examples 16-19 are lower than those of Example 1. For Example 16 and Example 17, the temperatures of the microwave sintering are too high and too low, respectively, and when the temperature of the microwave sintering is too high, the ferrite grains will grow rampantly to form giant crystals, and thus the permeability and Curie temperature of the material will be reduced; when the temperature of the microwave sintering is too low, the grains will not get full growth, resulting in uneven grain growth, and the un-full and incomplete grains are also not conducive to improving the permeability and Curie temperature of the material. For Example 18 and Example 19, the durations of the microwave sintering are too long and too short, respectively, and when the time of the microwave sintering is too long, the temperature-holding time will be extended, the grain size will be larger, and any mistake, even a small one, over controlling the grain growth conditions will cause the growth of abnormal grains, the result of which is that the ferrite material has dual structures and its performance is reduced directly; when the time of the microwave sintering is too short, the grains will have small size and incomplete morphology, which also leads to reduced performance. Therefore, the conditions of microwave sintering also have a significant effect on the performance of NiCuZn ferrite material.
(5) The initial permeability of the NiCuZn ferrite material in Example 20 is lower than that of Example 1, the result of which is that the acidic or alkali raw material solution influences the subsequent compression molding process, and then influences the permeability of the product. Therefore, the initial permeability of the NiCuZn ferrite material can be increased by the dropwise addition of alkali solution to adjust the raw material solution to a neutral pH.
(6) The initial permeability and Curie temperature of the NiCuZn ferrite materials in Comparative Example 1-5 are lower than those of Example 1, because the process of microwave pre-sintering is not performed in Comparative Example 1, the microwave pre-sintering is replaced by furnace pre-sintering in Comparative Example 2, the process of magnetic field heat treatment is not performed in Comparative Example 3, the magnetic field heat treatment is replaced by a heat treatment without magnetic field in Comparative Example 4, and the microwave sintering is replaced by furnace sintering in Comparative Example 5. As can be seen from the data of Comparative Examples 1-5, the microwave process can significantly improve the performance of the NiCuZn ferrite powder material, and the synergistic effect among the magnetic field heat treatment, the microwave pre-sintering, and the microwave sintering plays an important role in improving the initial permeability and Curie temperature of the NiCuZn ferrite powder material.

The applicant declares that the above is only specific embodiments of the present application, but the protection scope of the present application is not limited thereto, and it should be apparent to those skilled in the art that any changes or substitutions, which are obvious under the technical teaching disclosed by the present application, shall all fall within the protection and disclosure scope of the present application.

## Claims

1. A preparation method for a NiCuZn ferrite material, comprising:
performing pre-treatment and magnetic field heat treatment sequentially on a raw material to obtain a precursor powder, and then performing microwave pre-sintering, compression molding and microwave sintering sequentially on the precursor powder to obtain the NiCuZn ferrite material.

2. The preparation method according to claim 1, wherein the pre-treatment comprises:
dissolving the raw material in a solvent to form a raw material solution, adding an alkali solution dropwise to adjust the raw material solution to a neutral pH, and then performing stirring treatment and drying sequentially.

3. The preparation method according to claim 1 or 2, wherein the raw material comprises iron oxide, nickel oxide, zinc oxide and copper oxide.

4. The preparation method according to any one of claims 1 to 3, wherein a molar ratio of iron oxide, nickel oxide, zinc oxide and copper oxide is 50:(11-13):(32-34):(5-6).

5. The preparation method according to any one of claims 1 to 4, wherein the raw material further comprises a carbon material;
preferably, the carbon material comprises graphene and/or carbon fibers;
preferably, the solvent comprises deionized water;
preferably, citric acid is added to the raw material solution before using the alkali solution to adjust the pH of the raw material solution;
preferably, the pH of the raw material solution is adjusted to 6-8;
preferably, the alkali solution comprises ammonia water;
preferably, the alkali solution has a mass concentration of 1.5-3.8wt%;
preferably, the stirring treatment has a temperature of 70-75°C;
preferably, the stirring treatment has a time of 5-10 min;
preferably, the stirring treatment has a speed of 20-26 rpm/min;
preferably, the drying has a temperature of 155-165°C;
preferably, the drying has a time of 2-2.5 h.

6. The preparation method according to any one of claims 1 to 5, wherein the magnetic field heat treatment has a magnetic field strength of 40-55 mT;
preferably, the magnetic field heat treatment has a temperature of 465-475°C;
preferably, the magnetic field heat treatment has a time of 60-70 min;
preferably, cooling treatment is performed after the magnetic field heat treatment to obtain the precursor powder;
preferably, the cooling treatment is natural cooling.

7. The preparation method according to any one of claims 1 to 6, wherein a primary ball milling, centrifugal spray granulation and a primary screening are performed sequentially on the precursor powder before the microwave pre-sintering.

8. The preparation method according to claim 7, wherein the primary ball milling is wet ball milling;
preferably, the primary ball milling has a time of 50-70 min;
preferably, the primary ball milling has a rotation speed of 20-30 rpm/min;
preferably, mill balls of the primary ball milling are zirconia balls;
preferably, in the primary ball milling, a mass ratio of the mill balls, water and precursor powder is (5-6):(0.8-1.0):1;
preferably, a primary ball milled product is obtained from the primary ball milling, and the primary ball milled product has a particle size of 1-1.5 µm;
preferably, the centrifugal spray granulation has an inlet temperature of 250-350°C;
preferably, the centrifugal spray granulation has an outlet temperature of 80-110°C;
preferably, the primary screening is performed with a sieve of 100-400 mesh.

9. The preparation method according to any one of claims 1 to 8, wherein the microwave pre-sintering has a power of 2.5-8.5 kw;
preferably, the microwave pre-sintering has a frequency of 2.4-2.45 GHz;
preferably, the microwave pre-sintering has a temperature of 650-750°C, further preferably 700-720°C;
preferably, the microwave pre-sintering has a time of 20-40 min, further preferably 25-35 min;
preferably, the microwave pre-sintering has an atmosphere of air.

10. The preparation method according to any one of claims 1 to 9, wherein a secondary ball milling, spray granulation and a secondary screening are performed sequentially between the microwave pre-sintering and compression molding;
preferably, the secondary ball milling is wet ball milling;
preferably, the secondary ball milling has a time of 170-190 min;
preferably, the secondary ball milling has a rotation speed of 20-30 rpm/min;
preferably, mill balls of the secondary ball milling are zirconia balls;
preferably, in the secondary ball milling, a mass ratio of the mill balls, water and a product of the microwave pre-sintering is (5-6):(0.8-1.0): 1;
preferably, molybdenum oxide is also added in the secondary ball milling;
preferably, the molybdenum oxide has an addition amount of 0-0. 15wt% based on a total mass fraction of the iron oxide, nickel oxide, zinc oxide and copper oxide being 100%;
preferably, a secondary ball milled product is obtained from the secondary ball milling, and the secondary ball milled product has a particle size of 0.8-0.95 µm;
preferably, the spray granulation has an inlet temperature of 250-400°C;
preferably, the spray granulation has an outlet temperature of 80-110°C;
preferably, the secondary screening is performed with a sieve of 30-200 mesh.

11. The preparation method according to any one of claims 1 to 10, wherein the compression molding has a density of 3.3-3.5 g/cm³;
preferably, the microwave sintering has a power of 3.5-11.7 kw;
preferably, the microwave sintering has a frequency of 2.43-2.48 GHz;
preferably, the microwave sintering has a temperature of 1000-1200°C;
preferably, the microwave sintering has a time of 7-8 h;
preferably, the microwave sintering has an atmosphere of air.

12. The preparation method according to any one of claims 1 to 11, comprising the following steps:
(1) dissolving iron oxide, nickel oxide, zinc oxide and copper oxide in deionized water at a molar percentage of 50:(11-13):(32-34):(5-6), adding a carbon material and dissolving to obtain a raw material solution, adding citric acid to the raw material solution, dropwise adding ammonia water at a mass concentration of 1.5-3.8wt% to adjust the raw material solution to a pH of 6-8, then performing stirring treatment at 70-75°C for 5-10 min with a speed of 20-26 rpm/min, then performing drying at 155-165°C for 2-2.5 h, subsequently performing magnetic field heat treatment on the dried product at 465-475°C for 60-70 min with a magnetic field strength of 40-55 mT, and performing cooling to obtain a precursor powder;
(2) performing wet ball milling at a rotation speed of 20-30 rpm/min for 50-70 min with mill balls, water and the precursor powder at a mass ratio of (5-6):(0.8-1.0): 1 to obtain a primary ball milled product with a particle size of 1-1.5 µm, and subsequently performing centrifugal spray granulation and a primary screening sequentially on the primary ball milled product, wherein the centrifugal spray granulation has an inlet temperature of 250-350°C and an outlet temperature of 80-110°C, and the primary screening is performed with a sieve of 100-400 mesh;
(3) performing heating to 650-750°C at a microwave power of 2.5-10.5 kw and a microwave frequency of 2.4-2.45 GHz, and performing microwave pre-sintering on particles obtained from the primary screening for 20-40 min in an air atmosphere to obtain a microwave pre-sintered product;
(4) performing wet ball milling at a rotation speed of 20-30 rpm/min for 170-190 min with mill balls, water and the microwave pre-sintered product at a mass ratio of (5-6):(0.8-1.0):1, adding 0-0.15wt% of molybdenum oxide in the secondary ball milling, based on a total mass fraction of the iron oxide, nickel oxide, zinc oxide and copper oxide being 100%, to obtain a secondary ball milled product with a particle size of 0.8-0.95 µm, and subsequently performing spray granulation and a secondary screening sequentially on the secondary ball milled product, wherein the spray granulation has an inlet temperature of 250-400°C and an outlet temperature of 80-110°C, and the secondary screening is performed with a sieve of 30-200 mesh; and
(5) performing compression molding on particles obtained from the secondary screening, wherein the compression molding has a density of 3.3-3.5 g/cm³, subsequently performing heating to 1000-1200°C at a microwave power of 3.5-11.7 kw and a microwave frequency of 2.43-2.48 GHz, and performing microwave sintering for 7-8 h in an air atmosphere to obtain the NiCuZn ferrite material.

13. A NiCuZn ferrite material, which is obtained by using the preparation method according to any one of claims 1 to 12.

14. The NiCuZn ferrite material according to claim 13, wherein the NiCuZn ferrite material is powdered particles;
preferably, the NiCuZn ferrite material has a particle size of 100-156 µm.

15. Use of the NiCuZn ferrite material according to claim 13 or 14, wherein the NiCuZn ferrite material is used in the field of wireless charging.
